(19) Europäisches Patentamt
European Patent Office
Office européen des brevets

(11) Veröffentlichungsnummer: **0 024 485**
**B1**

(12) **EUROPÄISCHE PATENTSCHRIFT**

(45) Veröffentlichungstag der Patentschrift: **06.10.82**

(51) Int. Cl.³: **C 08 F 210/16,** C 08 F 4/62

(21) Anmeldenummer: **80103310.1**

(22) Anmeldetag: **13.06.80**

(54) **Verfahren zur Herstellung von Copolymeren des Ethylens mit mindestens einem anderen 1-Monoolefin und gegebenenfalls einem nichtkonjugierten Dien.**

(30) Priorität: **22.08.79 DE 2933885**

(43) Veröffentlichungstag der Anmeldung: **11.03.81 Patentblatt 81/10**

(45) Bekanntmachung des Hinweises auf die Patenterteilung: **06.10.82 Patentblatt 82/40**

(84) Benannte Vertragsstaaten: **FR GB IT NL**

(56) Entgegenhaltungen:
**DE-A-1 595 442**
**DE-A-2 001 702**

(73) Patentinhaber: **CHEMISCHE WERKE HÜLS AG, Postfach 1320, D-4370 Marl 1 (DE)**

(72) Erfinder: **Zaar, Wolfgang, Dr., Leverkusener Strasse 29, D-4370 Marl (DE)**
Erfinder: **Schröder, Manfred, Dr., Wolfener Strasse 1, D-4370 Marl (DE)**
Erfinder: **Maahs, Günther, Dr., Oderbruchstrasse 19, D-4370 Marl (DE)**

**EP 0 024 485 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

Verfahren zur Herstellung von Copolymeren des Ethylens mit mindestens einem anderen 1-Monoolefin und gegebenenfalls einem nicht-konjugierten Dien

Die Herstellung von Copolymeren aus 1-Olefinen gelingt allgemein mit Hilfe von sogenannten Ziegler-Natta-Katalysatoren, von denen Kombinationen (Mischkatalysatoren) aus Vanadiumverbindungen und Alkylaluminiumhalogeniden am besten geeignet sind. Diese Verbindungen sind in den indifferenten Lösungsmitteln, in denen die Polymerisation abläuft, löslich. Ein Nachteil ist, daß die Katalysatoren in verhältnismäßig hoher Konzentration eingesetzt werden müssen, da die pro Katalysatoreinheit gebildete Polymerisatmenge nicht groß ist. Sucht man diesen Nachteil durch ein erhöhtes Monomerenangebot und/oder durch höheren Druck auszugleichen, so wird die Katalysatoraktivität zwar etwas gesteigert, aber das Molekulargewicht der entstehenden Polymerisate wird so hoch, daß diese nur schlecht verarbeitet werden können. Außerdem bedingt das relativ hohe Molekulargewicht eine hohe Lösungsviskosität der Polymeren, so daß die Wärmeabführung während der Polymerisation erschwert ist; damit wird die Polymerisation in großen Reaktionsgefäßen unwirtschaftlich.

Es ist bekannt, daß man durch Zusatz von halogenierten organischen Verbindungen, die man als Promotoren, Reaktivatoren oder Aktivatoren bezeichnet, die Polymerisationsausbeute steigern kann. So werden in der FR-PS 1 417 195 Trihalogenessigsäuren, insbesondere deren Ester, Hexachlorpropylen sowie Hexachloraceton als Promotoren genannt.

Ferner ist die Verwendung von Hexachlorcyclopentadien aus der FR-PS 1 370 358 bekannt.

Derartige Zusätze haben aber den Nachteil, daß sie in den Konzentrationen, die man anwenden müßte, damit sie ihre Wirkung in ausreichendem Maße entfalten, die Mischkatalysatoren inhibieren.

Eine Minderung dieser Nachteile brachte die Verwendung von Perchlorbutensäureverbindungen (DE-PS 1 595 442), hergestellt nach A. Roeding und P. Bernemann (Liebigs Ann. Chem., 600 (1956), 1), wobei es seinerzeit analytisch nicht möglich war zu unterscheiden, ob es sich um Verbindungen der Perchlorcrotonsäure oder der isomeren Perchlorvinylessigsäure handelt.

Erst in neuerer Zeit ist eine eindeutige Zuordnung zugunsten der Konstitution der Perchlorvinylessigsäure gelungen.

Es bestand aber immer noch ein Bedürfnis nach einem verbesserten Verfahren zur Herstellung von Copolymeren des Ethylens mit mindestens einem anderen 1-Monoolefin und gegebenenfalls einem nicht-konjugierten Dien, das heißt, Aufgabe der vorliegenden Erfindung war es, ein Verfahren zu entwickeln, bei dem die Reaktionsgeschwindigkeit gesteigert, der Gehalt an Fremdsubstanzen und der Gelanteil im Polymeren vermindert und die Wirtschaftlichkeit des Verfahrens durch die Bereitstellung eines gegenüber den marktgängigen Aktivatoren billigeren Aktivators gesteigert wird.

Diese Aufgabe wurde durch die in den Ansprüchen beschriebenen Maßnahmen gelöst.

Geeignete 1-Monoolefine, die bei dem beanspruchten Verfahren einzeln oder im Gemisch mit Ethylen copolymerisiert werden können, sind alle geradkettigen und verzweigten 1-Alkene mit 3 bis 16 C-Atomen. Typische Vertreter sind Propen, 1-Buten, 1-Penten, 1-Hexen, 1-Octen, 1-Nonen, 1-Decen und 4-Methyl-1-penten. Bevorzugtes 1-Monoolefin ist Propylen.

Zur Copolymerisation mit Ethylen und den genannten 1-Monoolefinen geeignete nicht-konjugierte Diene sind beispielsweise cis- und trans-1,4-Hexadien, 1,5-Hexadien, 1,4-Pentadien, 2-Methyl-1,4-pentadien, 3-Methyl-1,4-hexadien, 4-Methyl-1,4-hexadien, 1,9-Decadien, exo- und endo-Dicyclopentadien, exo- und endo-Alkenylnorbornene, wie 5-Propenyl-, 5-(buten-2-yl)- und 5-(2-Methylbuten-(2')-yl)-norbornen, Alkyl-alkenylnorbornene, wie z. B. 5-Methyl-6-propenyl-norbornen, Alkylidennorbornene, wie 5-Methylen-, 5-Ethyliden- und 5-iso-Propyliden-2-norbornen, Vinylnorbornen, Cyclohexenylnorbornen, Alkylnorbornadiene, wie Methyl-, Ethyl- und Propylnorbornadien, oder Cyclodiene, wie 1,5-Cyclooctadien, wobei 5-Ethyliden-2-norbornen, cis- und trans-1,4-Hexadien und Dicyclopentadien (exo- und/oder endo-) bevorzugt sind.

Die genannten ungesättigten Monomeren (Ethylen, 1-Monoolefine und nicht-konjugierte Diene) können innerhalb breiter Bereiche eingesetzt werden. Im allgemeinen werden nach dem erfindungsgemäßen Verfahren jedoch vornehmlich amorphe und hochmolekulare gesättigte Copolymere hergestellt, die aus 15 bis 90 Gewichtsprozent, vorzugsweise 30 bis 75 Gewichtsprozent Ethylen und aus 85 bis 10 Gewichtsprozent, vorzugsweise 70 bis 25 Gewichtsprozent, mindestens eines 1-Monoolefins bestehen, sowie ungesättigte Copolymere, die außer Ethylen und 1-Monoolefin(en) aus einem oder mehreren nicht-konjugierten Dien(en) bestehen, und zwar in einer solchen Menge, daß in den ungesättigten Copolymerisaten 0,5 bis 30 Doppelbindungen/1000 C-Atome enthalten sind.

Als Verbindungen von Metallen der I. bis III. Hauptgruppe des Periodensystems (Hollemann-Wiberg, Lehrbuch der anorganischen Chemie (1956), Periodensystem der Elemente), die mindestens ein Wasserstoffatom oder eine Alkylgruppe oder eine Arylgruppe an das Metallatom gebunden enthalten, eignen sich beispielsweise Amylnatrium, Butyllithium, Diethylzink, insbesondere jedoch Aluminiumverbindungen, wie beispielsweise Trialkyl-, Triaryl-, und Triaralkylaluminium-Verbindungen, wie Trimethylaluminium, Triethylaluminium, Triisobutylaluminium, Triphenylaluminium, Tri-(ethylphenyl)-aluminium sowie Gemische dieser Verbindungen, ferner auch Alkylaluminiumhalogenide der allgemeinen Formel $AlR_nX_{3-n}$, in der X Chlor oder Brom, R einen Alkylrest mit bis zu 6 C-Atomen und n eine Zahl von $\geq 1$ bis $\leq 2$ bedeutet, z. B. Diethylaluminiummonochlorid, Diethylaluminiummonobromid, Ethylaluminiumdichlorid und Ethylaluminiumdibromid sowie mit besonderem Vorteil die als Alkylaluminiumesquichloride bezeichneten äquimolaren Gemische aus einem Dialkylaluminiummonochlorid und einem Alkylaluminiumdichlorid. Bevorzugt wird bei dem erfindungsgemäßen Verfahren Ethylaluminiumsesquichlorid [$(C_2H_5)_3Al_2Cl_3$] eingesetzt.

Geeignete Verbindungen der Metalle der IV. bis VI. Nebengruppe des Periodensystems sind Titantetrachlorid und Chlortitansäureester, wie Dichlortitansäurediethylester [$Ti(OC_2H_5)_2Cl_2$], Chromtrioxid allein oder im Gemisch mit Titanverbindungen, Chromester, wie Chrom-III-2-ethylhexanoat, Organozinnchromate, wie Bis-triphenylzinnchromat, insbesondere aber Vanadiumverbindungen, und zwar bevorzugt in organischen Lösemitteln lösliche Vanadiumverbindungen, beispielsweise Vanadiumtrichlorid, Vanadiumtetrachlorid und Vanadiumoxidchlorid, ferner Vanadiumester, wie Vanadiumtriacetat [$V(OOC \cdot CH_3)_3$] und Vanadiumtriacetylacetonat [$V(C_5H_7O_2)_3$], vorrangig jedoch Vanadiumoxidchlorid.

Der Mischkatalysator enthält die Metalle der I. bis III. Hauptgruppe einerseits und der IV. bis VI. Nebengruppe andererseits im allgemeinen in einem Molverhältnis von 60 : 1 bis 5 : 1, vorzugsweise von 45 : 1 bis 10 : 1. Das Verhältnis von Metall der IV. bis VI. Nebengruppe zu den eingesetzten Monomeren beträgt 0,0001 bis 0,03 g Atom/Mol Monomere, vorzugsweise 0,001 bis 0,005 g Atom/Mol Monomere.

Als 2,3,4,4-Tetrachlor-2-butensäureester der allgemeinen Formel $HCCl_2-CCl=CCl-COOR$ sind vor allem solche geeignet, in denen R einen geradkettigen oder verzweigten aliphatischen Rest mit 1 bis 15 Kohlenstoffatomen oder einen cycloalipahtischen Rest aus 3 bis 12 Kohlenstoffatomen oder einen aromatischen Rest mit 6 bis 14 C-Atomen bedeutet. Die gesättigten und die ungesättigten cyclischen Reste können gegebenenfalls durch einen oder mehrere aliphatische geradkettige oder verzweigte Reste substituiert sein. Weiterhin kann der Rest R partiell halogeniert oder perhalogeniert, vorzugsweise chloriert sein.

Geeignete Ester der 2,3,4,4-Tetrachlor-2-butensäure sind beispielsweise Methyl-, Ethyl-, Propyl-, iso-Propyl-, n-Butyl-, sek.-Butyl-, iso-Butyl-, tert.-Butyl-, n-Pentyl-, n-Hexyl-, n-Heptyl-, 2-Methylhexyl-, 2-Ethylhexyl-, n-Octyl-, n-Nonyl-, n-Decyl- und n-Dodecyl-, Cyclopropyl-, Cyclopentyl-, Cyclohexyl-, Cyclooctyl-, Cyclodecyl-, Cyclododecyl-, Phenyl-, o-, m- und p-Kresyl-, $\alpha$- und $\beta$1-Naphthyl-, 2,3,3,3-Tetrachlorpropyl-, 2,4,4,4-Tetrachlorbutyl-, 3,5,5,5-Tetrachlorpentyl-, Mono-, Di-, Tri-, Tetra- und Pentachlor- bzw. -bromphenyl-, wie beispielsweise 2-Chlorphenyl-, 3-Chlorphenyl-, 4-Chlorphenyl-, 2,3-Dichlorphenyl-, 2,4-Dichlorphenyl-, 2,5-Dichlorphenyl-, 2,6-Dichlorphenyl-, 2,4,6-Trichlorphenyl-, 2,3,4,6-Tetrachlorphenyl- und Pentachlorphenylester. Besonders bevorzugt sind der Methyl- und der n-Butylester.

Die 2,3,4,4-Tetrachlor-2-butensäureester werden in Konzentrationen von 5 bis 250 mMol, vorzugsweise 50 bis 100 mMol, pro 1 mMol der Verbindung eines Metalls der IV. bis VI. Nebengruppe des Periodensystems, vorzugsweise der Vanadiumverbindung, eingesetzt.

Durch den Zusatz der 2,3,4,4-Tetrachlor-2-butensäureester bleibt die polymerisationsaktive Wertigkeitsstufe der Metalle der IV. bis VI. Nebengruppe länger erhalten, so daß das Katalysatorsystem optimal genutzt wird. 2,3,4,4-Tetrachlor-2-butensäureester können auch im Gemisch mit anderen Aktivatoren, wie 2,3,4,4-Tetrachlor-3-butensäureester, Perchlorvinylessigsäureester, Hexachloraceton, Hexachlorcyclo-1,3-pentadien, Hexachlor-1,3-butadien und Trichloressigsäureester, verwendet werden, soweit ihre Wirkung bzw. die des Mischkatalysators dadurch nicht beeinträchtigt wird.

Die in den Beispielen angeführten 2,3,4,4-Tetrachlor-2-butensäureester lassen sich in guten Ausbeuten ausgehend von Perchlorcyclobutenon herstellen. Unter Ringöffnung hydrolysiert man das cyclische Keton mit wäßriger Natriumbicarbonatlösung zu 2,3,4,4-Tetrachlor-2-butensäure. Nach G. Maahs, Liebigs Ann. Chem. 686, 55—63 (1965), entsteht bei dieser Umsetzung 3,4,4,4-Tetrachlor-2-butensäure, deren Konstitution nach früheren Kenntnissen und Untersuchungsmethoden nicht gesichert war, nach neueren Untersuchungen mittels $^{13}C$-NMR-Spektroskopie liegt jedoch eindeutig 2,3,4,4-Tetrachlor-2-butensäure vor.

Die Umsetzung dieser Säure mit Thionylchlorid führt in hohen Ausbeuten zum entsprechenden Säurechlorid, das in bekannter Weise mit Alkoholen die betreffenden Ester liefert.

Die Copolymerisation kann in verflüssigten Monomeren unter Druck erfolgen, vorteilhaft arbeitet man jedoch in Gegenwart inerter Lösemittel, z. B. in unter den Reaktionsbedingungen flüssigen Kohlenwasserstoffen oder Kohlenwasserstoffgemischen, wie Butan, Pentan, Hexan, Cyclohexan, Isopropylcyclohexan, Benzinfraktionen, wie Petrolether, ferner Benzol, Toluol und Xylol oder auch chlorierten Kohlenwasserstoffen, wie Tetrachlorethylen oder Chlorbenzol und deren Gemischen. Als besonders geeignet hat sich Hexan erwiesen.

Wesentlich ist, daß die Lösungsmittel durch geeignete Reinigung möglichst frei von Wasser und anderen H-aciden Verbindungen sowie Verbindungen mit Donatorfunktionen (Lewis-Basen) eingesetzt werden. Außer geringen Mengen, die gegebenenfalls zur Erzielung bestimmter Effekte zugesetzt werden, beeinträchtigen solche Verunreinigungen im allgemeinen die Aktivität des Katalysators. Lewis-Basen, die, in bis zu 20facher Menge des Aktivators eingesetzt, beim erfindungsgemäßen Verfahren einen positiven Effekt ergeben, sind beispielsweise Ammoniak, Anilin, Pyridin, Chinolin, Triethylamin und Cyclohexylamin.

Die Reaktion verläuft besonders glatt, wenn man Mischkatalysatoren einsetzt, die in den verwendeten Lösungsmitteln löslich oder kolloidal verteilt sind.

Die Polymerisation wird im allgemeinen bei Temperaturen von 0 bis +80° C, vorzugsweise von +10 bis +79° C, durchgeführt.

Die Reaktion gelingt ohne Anwendung von Druck mit ausreichender Geschwindigkeit, kann aber auch unter Druck ausgeführt werden. Die vorzugsweise kontinuierlich durchgeführte Polymerisation wird in an sich bekannter Weise durch Zugabe von wasserstoffaktiven Substanzen, wie Wasser, Alkoholen oder Carbonsäuren, abgebrochen.

Die Aufarbeitung der nach dem erfindungsgemäßen Verfahren hergestellten Copolymere kann auf verschiedene bekannte Weisen geschehen. Eine polymere Flüssigkeit wird man beispielsweise nach Inaktivierung des Katalysators lediglich durch Destillation — z. B. an einem Rotations- oder Dünnschicht-Verdampfer — von Lösungsmitteln und anderen flüchtigen Bestandteilen, wie Restmonomer und eventuell niederen Oligomeren, befreien, während man die Lösung eines Elastomeren zweckmäßigerweise besser durch Fällung, z. B. mit einem niederen Alkohol, wie Methanol, Ethanol oder Isopropanol, oder durch Entfernung des Lösemittels mit Wasserdampf aufarbeitet.

Die nach dem erfindungsgemäßen Verfahren hergestellten Copolymere, die im allgemeinen eine reduzierte spezifische Viskosität (RSV-Wert) von 0,5 bis 5 dl/g, vorzugsweise von 1 bis 3 dl/g, besitzen, eignen sich im vulkanisierten oder unvulkanisierten Zustand für viele technische Einsatzzwecke, z. B. zur Herstellung von Wasserschläuchen, Zylindermuffen, Schaumgummidichtungen, Stoßstangenpolster und Folien.

Die Erfindung wird an Hand der nachfolgenden Beispiele und Vergleichsbeispiele näher erläutert.

Die darin angegebenen Kenngrößen (RSV-Wert, unlöslicher Anteil in Toluol bei 90° C und Anzahl der Doppelbindungen/1000 C-Atome) wurden wie folgt bestimmt:

1) RSV-Wert in 0,1gewichtsprozentiger Lösung in p-Xylol bei 90° C.
2) Unlöslicher Anteil in Toluol bei 90° C, der ein orientierendes Maß für den Grad der Kristallinität ist, durch Erhitzen der Probe auf 90° C, wobei das gesamte Copolymere in Lösung geht. Nach Abkühlung auf 20° C fällt dann der angegebene Teil (Gewichtsprozent, bezogen auf das Gewicht der Probe) aus.
3) Anteil der Doppelbindungen /1000 C-Atome durch Infrarotspektroskopie.

## Beispiel 1

### I. Herstellung von 2,3,4,4-Tetrachlor-2-butensäure-n-butylester

#### a) 2,3,4,4-Tetrachlor-2-butensäurechlorid

In einem Rührkolben legt man 800 g (6,72 Mol) Thionylchlorid zusammen mit 2 ml Dimethylformamid als Beschleuniger vor, erwärmt unter Rühren auf 50° C und gibt innerhalb von 2 Stunden 350 g (1,56 Mol) kristalline 2,3,4,4-Tetrachlor-2-butensäure portionsweise zu. Dabei setzt eine starke Gasentwicklung ein. Nach vollständiger Zugabe erhitzt man 1 bis 2 Stunden zum Sieden (79° C) bis die Entwicklung von Schwefeldioxid und Chlorwasserstoff beendet ist (Blasenzähler am Kühlerausgang). Anschließend wird das Reaktionsgemisch über eine 10 cm-Kolonne destilliert. Man erhält 604 g (5,07 Mol) nicht umgesetztes Thionylchlorid und 359 g (1,48 Mol) 2,3,4,4-Tetrachlor-2-butensäurechlorid; Siedepunkt 102° C/26 mbar; $n_D^{20}$ : 1,5478. Ausbeute: 95% d. Th.

#### b) 2,3,4,4-Tetrachlor-2-butensäure-n-butylester

In einem Rührkolben werden 0,5 Mol n-Butanol vorgelegt und unter Rühren auf 50° C erwärmt. Innerhalb von 30 Minuten läßt man 60,6 g (0,25 Mol) 2,3,4,4-Tetrachlor-2-butensäurechlorid zutropfen und rührt anschließend 30 Minuten bei 80° C nach. Dabei wird die Hauptmenge des entstehenden Chlorwasserstoffs gasförmig ausgetrieben. Anschließend wird das Reaktionsgemisch ohne Neutralisation über eine 10 cm-Kolonne im Vakuum fraktioniert. Man erhält 64,4 g (0,23 Mol) 2,3,4,4-Tetrachlor-2-butensäure-n-butylester; Siedepunkt: 95° C/0,6 mbar; n : 1,5050. Ausbeute: 92% d. Th.

### II. Herstellung eines Copolymeren aus Ethylen, Propylen und Ethyliden-2-norbornen

#### a) Apparatur

Die Herstellung des Copolymeren erfolgt in einem Glasreaktor von 2 l Inhalt, der mit 1,5 l trockenem Hexan beschickt wird. Der Glasreaktor ist mit einem Rührer ausgestattet und trägt 3 graduierte Tropftrichter.

Tropftrichter 1 enthält 1,5 mMol $VOCl_3$ in 1 l Hexan, die mit 0,375 mMol pro Stunde während 4

Stunden zugetropft werden. Die mittlere Konzentration im Reaktor, bezogen auf 7 l Lösungsmittel, ist 0,214 mMol $VOCl_3$ pro Liter.

Tropftrichter 2 enthält 42 mMol Ethylaluminiumsesquichlorid in 1,5 l Hexan, die mit 10,5 mMol pro Stunde eingetropft werden, das sind wieder bezogen auf den Gesamtansatz, 6,0 mMol pro Liter.

Tropftrichter 3 enthält 4,4 mMol 2,3,4,4-Tetrachlor-2-butensäure-n-butylester sowie 50 mMol Ethylidennorbornen in 2,5 l Hexan. Bei einer Zutropfgeschwindigkeit von 1,1 bis 12,5 mMol pro Stunde beträgt die mittlere Konzentration im Reaktor 0,629 mMol bzw. 7,143 mMol pro Liter.

b) Polymerisation

Das Hexan wird bei Raumtemperatur unter Rühren mit Ethylen/Propylen im Molverhältnis 1 : 1,5 gesättigt. Danach wird auf 30 bis 35° C aufgeheizt und diese Temperatur über ein thermostatisiertes Bad während 4 Stunden Reaktionszeit gehalten. Während dieser Zeit werden die Lösungen der einzelnen Katalysatorkomponenten und der Terkomponente zugetropft und Ethylen/Propylen mit 1 : 1,5 Mol pro Stunde zugeführt.

c) Aufarbeitung

Die Polymerlösung wird kontinuierlich mit etwa 1,3 l pro Stunde in ein zweites Rührgefäß abgelassen, das 5 g eines handelsüblichen Stabilisators (ω-2,4-Di-tert.-butyl-3-hydroxiphenylpropionsäureoctadecylester) enthält. Durch Zugabe von 350 ml Isopropanol wird abgestoppt. Anschließend wird die Polymerlösung mit Wasserdampf in einer dafür gebräuchlichen Apparatur von Hexan befreit. Das Copolymere enthält danach ca. 50 Gewichtsprozent Wasser, das im Vakuumtrockenschrank bei 50° C entfernt wird, die Ausbeute beträgt 261 g.

d) Analytische Daten siehe Tabelle 1

Beispiele 2 bis 10 und Vergleichsbeispiele A bis C

Die Beispiele und die Vergleichsbeispiele wurden in der in Beispiel 1 beschriebenen Apparatur durchgeführt. Durchführung der Polymerisation und Aufarbeitung der Polymeren erfolgte ebenfalls unter den Bedingungen des Beispiels 1. Geändert wurden die Aktivatoren, die Katalysatorkonzentration und/oder das Verhältnis von Ethylen zu Propen des Eingases. Die einzelnen Katalysatorkomponenten sind in der Tabelle wie folgt bezeichnet:

a = $VOCl_3$

b = $(C_2H_5)_3Al_2Cl_3$

c = $CHCl_2—CCl{=}CCl—COOR$

$c_1$ R = $—CH_3$

$c_2$ R = $—C_2H_5$

$c_3$ R = $—n—C_4H_9$

$c_4$ R = $—CH_2CH_2Cl$

$c_5$ R = $—CH_2CH_2CH_2Cl$

$c_6$ R = 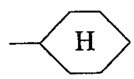

$c_7$ R = 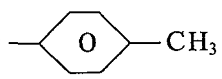

$c_8$ R = 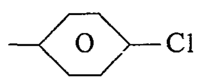

d $CCl_2 = CCl—CCl_2—COO—n—C_4H_9$

Die analytischen Daten zeigt ebenfalls Tabelle 1.

Tabelle 1

| | Beispiel 1 | A | 2 | B | 3 | C |
|---|---|---|---|---|---|---|
| Komponente [mMol/l] | | | | | | |
| a | 0,214 | 0,214 | 0,214 | 0,214 | 0,25 | 0,25 |
| b | 6,0 | 6,0 | 6,0 | 6,0 | 3,0 | 3,0 |
| $c_3$ | 0,629 | – | 0,629 | – | 0,629 | – |
| d | – | 0,629 | – | 0,629 | – | 0,629 |
| Ethylen/Propen [Mol/h] | 1 : 1,5 | 1 : 1,5 | 1,3 : 1,3 | 1,3 : 1,3 | 1,7 : 0,8 | 1,7 : 0,8 |
| Ausbeute | | | | | | |
| [g] | 261 | 234 | 275 | 258 | 304 | 255 |
| (%) | (77) | (67) | (76) | (71) | (93) | (79) |
| Analytik | | | | | | |
| ML 1+4 (100°C) DIN 53 523 | 115 | 60 | 165 | 125 | 150 | 146 |
| unlösl. Anteil in Toluol | | | | | | |
| bei 20°C [%] | <2 | <2 | <2 | 5 | 10 | 25 |
| bei 90°C | <2 | <2 | <2 | <2 | 7 | 12 |
| Propengehalt [%] | 55 | 56 | 50 | 47 | 40 | 35 |
| Doppelbindungen pro 1000 C-Atome | 5,6 | 5,6 | 5,6 | 5,6 | 5,5 | 5,6 |
| RSV-Wert [dl/g] | 2,65 | 2,60 | 2,43 | 2,50 | 2,52 | 2,60 |

Tabelle 1 (Fortsetzung)

| | Beispiel 4 | 5 | 6 | 7 | 8 | 9 | 10 |
|---|---|---|---|---|---|---|---|
| Komponente [mMol/l] | | | | | | | |
| a | 0,25 | 0,25 | 0,25 | 0,25 | 0,25 | 0,25 | 0,25 |
| b | 3,0 | 3,0 | 3,0 | 3,0 | 3,0 | 3,0 | 3,0 |
| $c_1$ | 0,629 | – | – | – | – | – | – |
| $c_2$ | – | 0,629 | – | – | – | – | – |
| $c_4$ | – | – | 0,629 | – | – | – | – |
| $c_5$ | – | – | – | 0,629 | – | – | – |
| $c_6$ | – | – | – | – | 0,629 | – | – |
| $c_7$ | – | – | – | – | – | 0,629 | – |
| $c_8$ | – | – | – | – | – | – | 0,629 |
| Ethylen/ Propen [Mol/h] | 1,7 : 0,8 | 1,7 : 0,8 | 1,7 : 0,8 | 1,7 : 0,8 | 1,7 : 0,8 | 1,7 : 0,8 | 1,7 : 0,8 |
| Ausbeute | | | | | | | |
| [g] | 250 | 260 | 275 | 265 | 225 | 230 | 240 |
| (%) | (77) | (80) | (85) | (82) | (69) | (71) | (74) |
| Analytik | | | | | | | |
| ML 1+4 (100°C) DIN 53 523 | 145 | 142 | 135 | 144 | 160 | 153 | 150 |
| Unlösl. Anteil in Toluol | | | | | | | |
| bei 20°C [%] | 6 | 10 | 32 | 36 | 20 | 30 | 28 |
| bei 90°C | 4 | 6 | 8 | 5 | 7 | 14 | 14 |
| Propengehalt [%] | 36 | 35 | 37 | 38 | 31 | 35 | 34 |
| Doppelbindungen pro 1000 C-Atome | 5,8 | 6,2 | 5,7 | 5,6 | 5,8 | 5,8 | 6,3 |
| RSV-Wert [dl/g] | 2,22 | 2,40 | 2,65 | 2,46 | 2,82 | 2,45 | 2,76 |

**Patentansprüche**

1. Verfahren zur Herstellung von Copolymerisaten aus Ethylen und mindestens einem anderen 1-Monoolefin und gegebenenfalls einem nicht-konjugierten Dien in Gegenwart von Mischkatalysatoren aus Verbindungen von Metallen der I. bis III. Hauptgruppe des Periodensystems, die mindestens ein Wasserstoffatom oder eine Alkyl- oder Arylgruppe an das Metallatom gebunden enthalten, und Verbindungen von Metallen der IV. bis VI. Nebengruppe des Periodensystems sowie organischen Chlorverbindungen als Aktivatoren, dadurch gekennzeichnet, daß als organische Chlorverbindungen 2,3,4,4-Tetrachlor-2-butensäureester der allgemeinen Formel

$$HCCl_2-CCl=CCl-COOR$$

verwendet werden, worin R einen gegebenenfalls halogenierten Alkyl-, Cycloalkyl-, Aryl- oder Aralkylrest bedeutet und wobei die Cycloalkyl-, Aryl- und Aralkylreste gegebenenfalls durch einen oder mehrere geradkettige oder verzweigte aliphatische Reste substituiert sind.

2. Verfahren nach Anspruch 1, dadurch gekennzeichnet, daß der Mischkatalysator ein Alkylaluminiumhalogenid der allgemeinen Formel $AlR_nX_{3-n}$, in der X Chlor oder Brom, R ein Alkylrest mit bis zu 6 C-Atomen und n eine Zahl von $\geq 1$ bis $\leq 2$ sein kann, und eine in organischen Lösemitteln lösliche Vanadiumverbindung enthält.

3. Verfahren nach den Ansprüchen 1 und 2, dadurch gekennzeichnet, daß der Mischkatalysator Ethylaluminiumsesquichlorid und Vanadiumoxichlorid enthält.

4. Verfahren nach den Ansprüchen 1 bis 3, dadurch gekennzeichnet, daß man als organische Chlorverbindung einen 2,3,4,4-Tetrachlor-2-butensäurealkylester verwendet.

5. Verfahren nach Anspruch 4, dadurch gekennzeichnet, daß man den 2,3,4,4-Tetrachlor-2-butensäure-n-butylester verwendet.

6. Verwendung von 2,3,4,4-Tetrachlor-2-butensäureestern der allgemeinen Formel

$$HCCl_2-CCl=CCl-COOR,$$

worin R einen gegebenenfalls halogenierten Alkyl-, Cycloalkyl-, Aryl- oder Aralkylrest bedeutet und wobei die Cycloalkyl-, Aryl- und Aralkylreste gegebenenfalls durch einen oder mehrere geradkettige oder verzweigte aliphatische Reste substituiert sind, als Aktivator bei der Copolymerisation von Ethylen mit mindestens einem anderen 1-Monoolefin und gegebenenfalls einem nichtkonjugierten Dien in Gegenwart von Mischkatalysatoren aus Verbindungen von Metallen der I. bis III. Hauptgruppe des Periodensystems, die mindestens ein Wasserstoffatom oder eine Alkyl- oder Arylgruppe an das Metallatom gebunden enthalten, und Verbindungen von Metallen der IV. bis VI. Nebengruppe des Periodensystems.

**Claims**

1. A process for the production of a copolymer of ethylene with at least one other 1-monoolefin and optionally a non-conjugated diene in the presence of a catalyst system comprising a compound of a non-transition metal of Group 1, 2 oder 3 of the Periodic Table having at least one hydrogen atom or alkyl or aryl group bound to the metal atom and a compound of a transition of Group 4, 5 or 6 of the Periodic Table and also an organic chlorine compound as activator, characterised in that there is used as organic chlorine compound a 2,3,4,4-tetrachloro-2-butenoic acid ester of the general formula

$$HCCl_2-CCl=CCl-COOR$$

where R is an optionally halogenated alkyl, cycloalkyl, aryl or aralkyl radical, the cycloalkyl, aryl and aralkyl radicals being optionally substituted by one or more straightchain or branched aliphatic radicals.

2. A process according to claim 1, characterised in that the catalyst system comprises an alkylaluminium halide of the general formula $AlR_nX_{3-n}$ in which X is chlorine or bromine, R is an alkyl radical of up to 6 carbon atoms and $1 \leq n \leq 2$, and a vanadium compound which is soluble in organic solvents.

3. A process according to claim 1 or 2, characterised in that the catalyst system comprises ethyl aluminium sesquichloride and vanadium oxychloride.

4. A process according to any of claims 1 to 3, characterised in that a 2,3,4,4-tetrachloro-2-butenoic acid alkyl ester is used as organic chlorine compound.

5. A process according to claim 4, characterised in that n-butyl 2,3,4,4-tetrachloro-2-butenoate ist used.

6. The use of 2,3,4,4-tetrachloro-2-butenoic acid esters of the general formula

$$HCCl_2-CCl=CCl-COOR$$

where R is an optionally halogenated alkyl, cycloalkyl, aryl or aralkyl radical, the cycloalkyl, aryl and aralkyl radicals being optionall substituted by ohne or more straightchain or branched aliphatic

radicals, as activators in the copolymerisation of ethylene with at least one other 1-monoolefin and optionally a non-conjugated diene in the presence of catalyst systems comprisint compounds of nontransition metals of Groups 1 to 3 of the Periodic Table having at least one hydrogen atom or alkyl or aryl group bound to the metal atom and compounds of transition metals of Groups 4 to 6 of the Periodic Table.

**Revendications**

1. Procédé de préparation de produits de copolymérisation de l'éthylène et d'au moins une autre 1-mono-oléfine et éventuellement d'un diène non conjugué, en présence de catalyseurs mixtes formés de composés de métaux des groupes principaux I à III de la Classification Périodique qui contiennent au moins un atome d'hydrogène ou un groupe alkyle ou aryle relié à l'atome de métal et de composés de métaux des groupes secondaires IV à VI de la Classification Périodique, ainsi que de composés organiques chlorés comme activants, caractérisé par le fait que, comme composés organiques chlorés, on utilise des esters d'acide 2,3,4,4-tétrachloro-2-buténoique de la formule générale:

$$HCCl_2-CCl=CCl-COOR$$

dans laquelle R repésente un radical alkyle, cyclo-alkyle, aryle ou aralkyle éventuellement halogéné, les radicaux cyclo-alkyle, aryle et aralkyle étant éventuellement substitués par un ou plusieurs radicaux aliphatiques à chaîne droite ou ramifiés.

2. Procédé selon la revendication 1, caractérisé par le fait que le catalyseur mixte contient un halogénure d'alkyl-aluminium de la formule générale:

$$AlR_nX_{3-n}$$

dans laquelle X peut être le chlore ou le brome, R un radical alkyle contenant jusqu'à 6 atomes de carbone et n un nombre entier de $\geq$ 1 à $\leq$ 2 et un composé de vanadium soluble dans les solvants organiques.

3. Procédé selon les revendications 1 et 2, caractérisé par le fait que le catalyseur mixte contient du sesquichlorure d'éthylaluminium et de l'oxychloure de vanadium.

4. Procédé selon l'une des revendications 1 à 3, caractérisé par le fait que, comme composé organique chloré, on utilise un ester alkylique d'acide 2,3,4,4-tétrachloro-2-buténoïque.

5. Procédé selon la revendication 4, caractérisé par le fait que l'on utilise le 2,3,4,4-tétrachloro-2-buténoate de n-butyle.

6. Application d'esters d'acide 2,3,4,4-tétrachloro-2-buténoïque de la formule générale:

$$HCCl_2-CCl=CCl-COOR$$

dans laquelle R représente un radical alkyle, cyclo-alkyle, aryle ou aralkyle éventuellement halogéné, les radicaux cyclo-alkyle, aryle et aralkyle étant éventuellement substitués par un ou plusieurs radicaux aliphatiques à chaîne droite ou ramifiés, comme activants dans la copolymérisation de l'éthylène et d'au moins une autre 1-mono-oléfine et éventuellement d'un diène non conjugué en présence de catalyseurs mixtes formés de composés de métaux des groupes principaux I à III de la Classification Périodique qui contiennent au moins un atome d'hydrogène ou un groupe alkyle ou aryle relié à l'atome de métal et de composés de métaux des groupes secondaires IV à VI de la Classification Périodique.